# EUROPÄISCHE PATENTANMELDUNG

(11) **EP 1 340 640 A1**
(43) Veröffentlichungstag der Anmeldung: **03.09.2003**
(21) Anmeldenummer: 03001470.8
(22) Anmeldetag: 23.01.2003
(51) Int. Cl.: B60J 5/04

(54) **Türrohbau für eine Kraftfahrzeugtür, Profilrahmen für einen Türrohbau und Verfahren zur Herstellung eines Profilrahmens für einen Türrohbau**

(30) Priorität: 13.02.2002 DE 10206090; 20.04.2002 DE 10217713
(71) Anmelder: Wagon Automotive GmbH, 63857 Waldaschaff (DE)
(72) Erfinder: Hock, Michael, Dipl.-Ing., 63762 Grossostheim (DE); Marutschke, Stefan, 63110 Rodgau (DE)
(74) Vertreter: Gesthuysen, von Rohr & Eggert

(57) **Zusammenfassung**

Gegenstand der Erfindung ist ein Türrohbau für eine Kraftfahrzeugtür mit einem vorzugsweise zumindest im Bereich der Fensterfläche umlaufenden Profilrahmen (12) aus Metall. Dieser ist dadurch gekennzeichnet, daß der Profilrahmen (12), insbesondere eine Hohlkammer (10) des Profilrahmens (12), zumindest abschnittsweise, insbesondere im Bereich eines im wesentlichen senkrecht verlaufenden Randes des Türrohbaus, einen sich über die Länge des Profilrahmens (12) ändernden Profilquerschnitt aufweist. Insbesondere folgt der Profilquerschnitt des Profilrahmens dem Verlauf des Türinnenblechs, so daß sich eine optimale Ausnutzung der bestehenden Hohlräume und Abstände ergibt und auch eine Verklebung des Türinnenblechs mit dem Profilrahmen möglich wird, weil entsprechend geringe Spaltweiten realisiert werden können.

## Beschreibung

Gegenstand der Erfindung ist zunächst ein Türrohbau für eine Kraftfahrzeugtür mit einem Profilrahmen aus Metall. Gegenstand der Erfindung ist auch ein Profilrahmen für einen Türrohbau einer Kraftfahrzeugtür. Gegenstand der Erfindung ist schließlich ein spezielles Herstellungsverfahren für einen solchen Profilrahmen.

Ständig steigende Anforderungen an Fahrzeugtüren hinsichtlich Reduzierung von Spaltweiten, Maßhaltigkeit von Funktionsflächen, Wiederholgenauigkeit etc. stellen eine ständige Herausforderung für die Fertigungsverfahren dar. Gleichzeitig sind Einbauanforderungen an Kraftfahrzeugtüren zu berücksichtigen, insbesondere die Steifigkeit des Türrahmens gegenüber Windabzugskräften, Türabsenkung etc.

Der Lehre liegt das Problem zugrunde, einen Türrohbau im zuvor erläuterten Problemfeld zu verbessern, einen entsprechenden Profilrahmen anzugeben, und anzugeben, mit welchem Verfahren ein solcher Profilrahmen besonders zweckmäßig herzustellen ist.

Die Lehre löst das zuvor erläuterte Problem dadurch, daß der Profilrahmen zumindest abschnittsweise, insbesondere im Bereich der B-Säule einer Kraftfahrzeugkarosserie, einen sich über die Länge des Profilrahmens ändernden Profilquerschnitt aufweist. Entsprechendes gilt für einen Profilrahmen als Halbfabrikat zum Aufbau eines Türrohbaus. Hinsichtlich der Herstellung eines solchen Profilrahmens empfiehlt es sich besonders, den gewünschten sich über die Länge des Profilrahmens ändernden Profilquerschnitt mit Hilfe eines hydraulischen Innenhochdruck-Umformverfahrens zu realisieren.

Die Lehre der vorliegenden Patentanmeldung läßt sich in allen Aspekten umfangreich ausgestalten und weiterbilden, wozu sich alle Anregungen in den Unteransprüchen sowie im nachfolgenden Text zur Erläuterung der Ausführungsbeispiele finden.

Bereits an dieser Stelle darf darauf hingewiesen werden, daß die Optimierung des Türrohbaus zur Folge hat, daß man mehr als bisher die Verbindungstechnik des Klebens mittels eines Strukturklebers einsetzen kann dort, wo bislang die Verbindungstechniken des Schweißens und des Bördelns bevorzugt werden mußten. Das wiederum führt dazu, daß die Produktanforderungen leichter eingehalten werden können, weil Bauteilverzug und Bauteiltoleranzen leichter einzuhalten sind. Im Fertigungsablauf wird häufiger auf die thermische Belastung der Bauteile beim Schweißen verzichtet werden können.

In der Zeichnung zeigt
- Abb. 1: schematisch den Aufbau eines Türrohbaus einer Kraftfahrzeugtür, hier der vorderen Seitentür links,
- Abb. 2: eine Kraftfahrzeugkarosserie mit eingezeichneten Profilrahmen der Kraftfahrzeugtüren,
- Abb. 3: schematisch eine Kraftfahrzeugtür,
vergrößert Schnitte Y-Y und Z-Z bei einer konventionell aufgebauten Kraftfahrzeugtür,
- Abb. 4: schematisch eine Kraftfahrzeugtür,
Schnitte X-X, Y-Y und Z-Z zu einer Kraftfahrzeugtür, die erfindungsgemäß aufgebaut ist.
- Abb. 5: ein Beispiel eines Profilrahmens einer Kraftfahrzeugtür, der als einteiliges Aluminium-Druckgußteil ausgeführt ist,
- Abb. 6: ein Beispiel eines Profilrahmens, der mehrteilig ausgeführt ist und hier einerseits zur A-Säule hin und andererseits zur B-Säule hin als Aluminium-Druckgußteil und dazwischen als Aluminium-Strangpreßprofil ausgeführt ist.

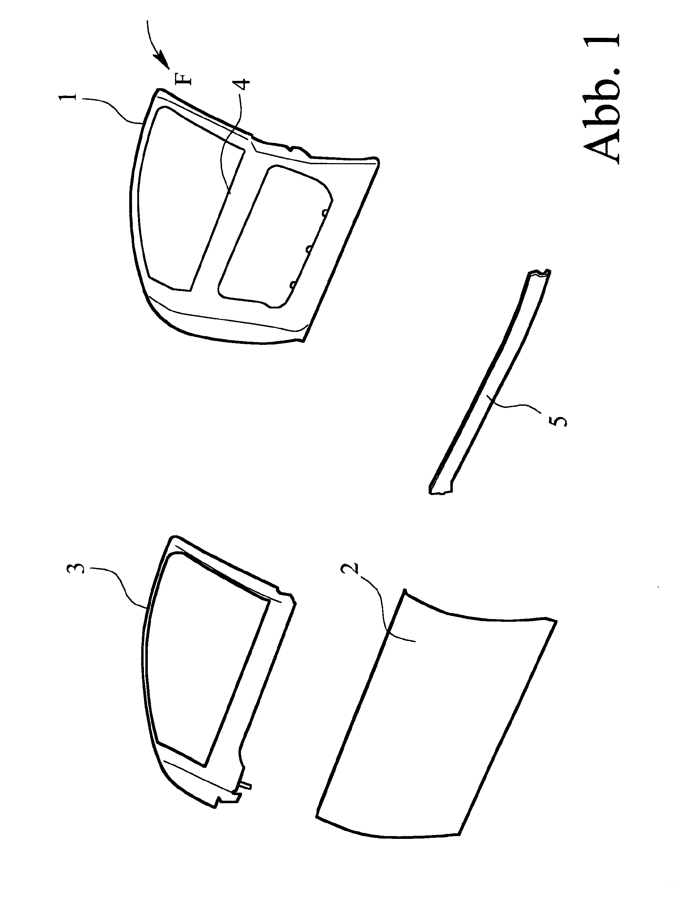

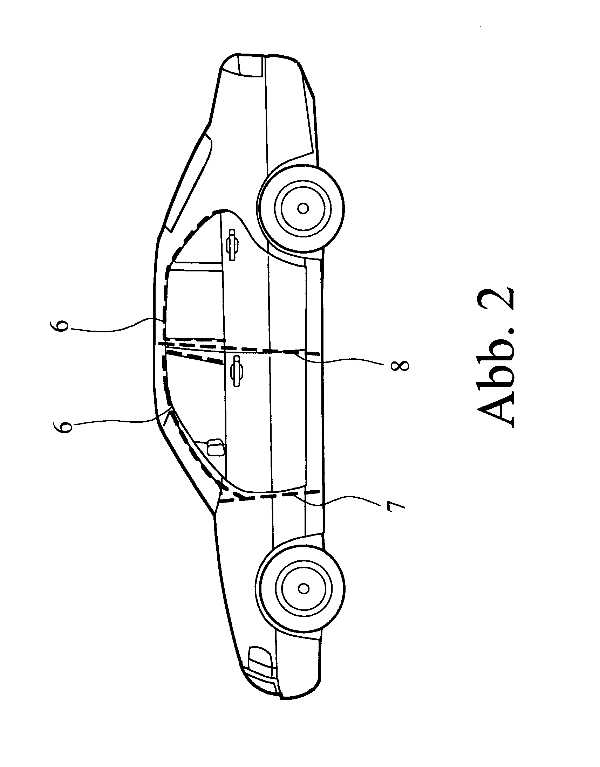

Bei Kraftfahrzeugtüren, beispielsweise für eine normale viertürige Limousine (Abb. 2) werden häufig einteilige Türinnenbleche 1 verwendet (Abb. 1). Außen wird das einteilige Türinnenblech 1 mit einem bis zur Fensterbrüstung reichenden Türaußenblech 2 versehen. Zumindest im Bereich der Fensterfläche wird ein zusätzliches Bauteil in Form eines Rahmenteils 3 eingesetzt. Dieses Rahmenteil 3 versteift die Kraftfahrzeugtür, so daß sie den Anforderungen in der Praxis gerecht wird. Eine weitere Versteifung wird bewirkt durch ein hier als Teil des Türinnenblechs 1 ausgebildetes inneres Fensterschachtprofil 4 und einen zusätzlich angebrachten Seitenaufprallschutz 5 / äußeres Fensterschachtprofil.

In Abb. 1 zeigt der Pfeil F die Richtung an, in der Windabzugskräfte auf den oberen Teil der Kraftfahrzeugtür wirken. Abb. 2 zeigt die Seitenansicht eines Kraftfahrzeugs und dort den Bereich, der in Ansehung von Windabzugskräften und anderen Einflüssen in der Praxis besonders verstärkt werden muß, Bereich 6, den Anschluß der vorderen Seitentür an die A-Säule 7 und den Anschluß der hinteren Seitentür an die B-Säule 8.

Die Kraftfahrzeugtür ist im unteren Bereich, also im Bereich des Türaußenblechs 1, im Türrahmen durch Scharniere und Schloß fest verankert. Im oberen Bereich, also im Bereich der Fensterfläche, wirken die Windabzugskräfte. Gibt zum Beispiel ein Hersteller einen Wert der elastischen Verformung unter bestimmten Randbedingungen vor, so muß dieser eingehalten werden unabhängig davon, aus welchem Metall der Türrohbau hergestellt ist. Je nach dem verwendeten Werkstoff ist jedoch der Elastizitätsmodul (E-Modul) unterschiedlich. Bei Stahl liegt der E-Modul in der Größenordnung von 210.000 N/mm², bei Aluminium in der Größenordnung von 70.000 N/mm². Eine Konstruktion des Türrohbaus aus Stahl mit einem Profilrahmen aus Stahl sieht also von vornherein anders aus als ein Türrohbau aus Aluminium mit Profilrahmen aus Aluminium. Gleichwohl sollen die gleichen Werte für die elastische Verformung erreicht werden.

Der Türrohbau einer Kraftfahrzeugtür aus Stahl zeigt speziell im Bereich des Rahmenteils 3 vorzugsweise streckgebogene Rollprofile, die häufig einen L-förmigen oder U-förmigen Querschnitt haben. Auch entsprechende Preßteile werden in Verbindung mit dem Türinnenblech 1 eingesetzt. Diese Bauteile werden einzeln oder auch als Baugruppe zusammen mit dem Türinnenblech 1 und abhängig von der Ausführungsart der Fahrzeugtür mit dem Türaußenblech 2 zum kompletten Türrohbau zusammengefügt. Die Fensterschachtverstärkung / Seitenaufprallschutz 5 übernimmt ebenso eine zusätzliche Strukturfunktion wie das Rahmenteil 3, das regelmäßig der Verstärkung des vom Türinnenblech 1 gebildeten Rahmens im Bereich der Fensterfläche dient.

Aus dem weiter oben beschriebenen Zusammenhang (E-Modul) ergibt sich, daß das Rahmenteil 3 bei einer Stahltür normalerweise aus einfachen Preßteilen besteht und in der zuvor beschriebenen, eine Hohlkammer bildenden Form ausreichend dimensioniert ist.

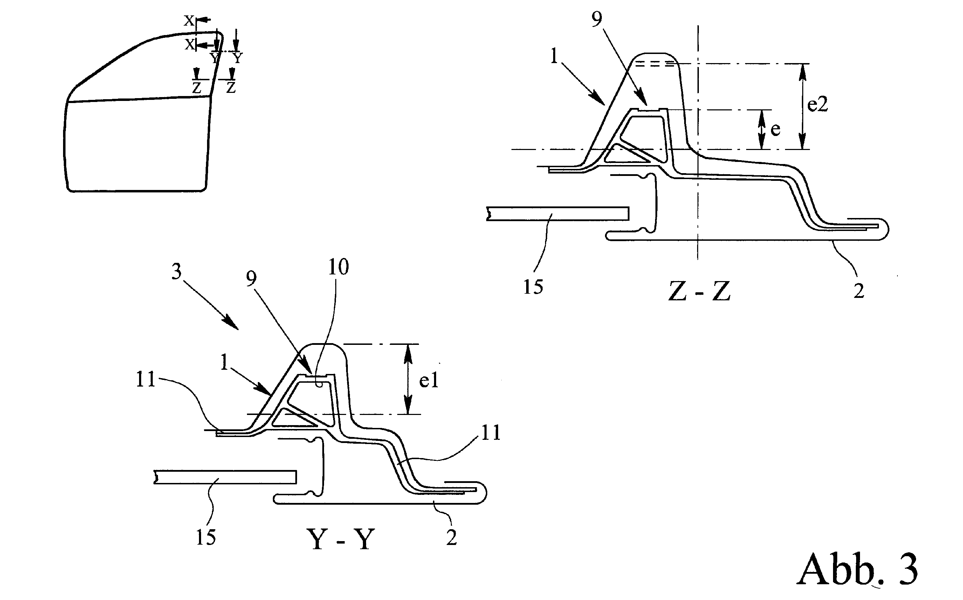

Ist ein Türrohbau der in Rede stehenden Art aus Aluminium oder einem anderen Leichtmetall herzustellen, so setzt man häufig im Bereich der Fensterfläche ein streckgebogenes Aluminium-Strangpreßprofil 9 (Abb. 3) mit einer geschlossenen Hohlkammer 10 ein. Dieses streckgebogene Strangpreßprofil 9 hat über die Länge einen konstanten Querschnitt und weist häufig integrierte Funktionsnuten oder nach außen abstehende Flansche 11 auf. Dies zeigen die Schnitte in Abb. 3. Die zusätzliche Ausgestaltung eines Strangpreßprofils 9 aus Aluminium mit geschlossener Hohlkammer 10 ist erforderlich, weil der vergleichsweise niedrigere E-Modul eine verformungssteifere Geometrie des Rahmenteils 3 erfordert.

Nachteilig wirkt sich in beiden Fällen, also sowohl bei Stahl als Werkstoff als auch bei Aluminium oder einem anderen Leichtmetall als Werkstoff, die Tatsache aus, daß eine Seitentür eines Kraftfahrzeugs in den meisten Fällen, jedenfalls im Bereich der B-Säule 8 (Abb. 2) als solche eine nicht konstante, sondern nach unten größer werdende Dicke aufweist. Diese Dicke kann sich auch ganz zum Boden der Karosserie hin wieder verringern. Im Mittelbereich hat die Kraftfahrzeugtür häufig die größte Dicke, dort sind auch viele Funktionsteile am Aggregateträger im Türrohbau angebracht. Abb. 3 zeigt, daß bereits im Bereich der Fensterfläche sich die Dicke der Kraftfahrzeugtür von oben nach unten vergrößert (von Schnitt Y-Y nach Schnitt Z-Z). Das Türinnenblech 1 wölbt sich beim Schnitt Z-Z weiter nach innen als beim Schnitt Y-Y.

Des weiteren kommt es zu Problemen in der Verbindungstechnik aufgrund ungünstiger geometrischer Verhältnisse bezüglich der optimalen Positionierung des Rahmenteils 3.

Letztlich wird existenter Bauraum, der an sich für eine Erhöhung der Verwindungssteifigkeit genutzt werden könnte, verschenkt. Dies kann man an dem zur Verfügung stehenden Randfaserabstandsmaß e2 in Schnitt Z-Z von Abb. 3 (siehe auch e1 in Schnitt Y-Y) im Vergleich mit dem tatsächlich genutzten Randfaserabstandsmaß e des dort eingesetzten Aluminium-Strangpreßprofils 9 erkennen. Gelegentlich wird versucht, diesen Hohlraum durch am Strangpreßprofil 9 zusätzlich angebrachte Verstärkungsteile auszunutzen. Das ist aber auch keine besonders zweckmäßige Lösung.

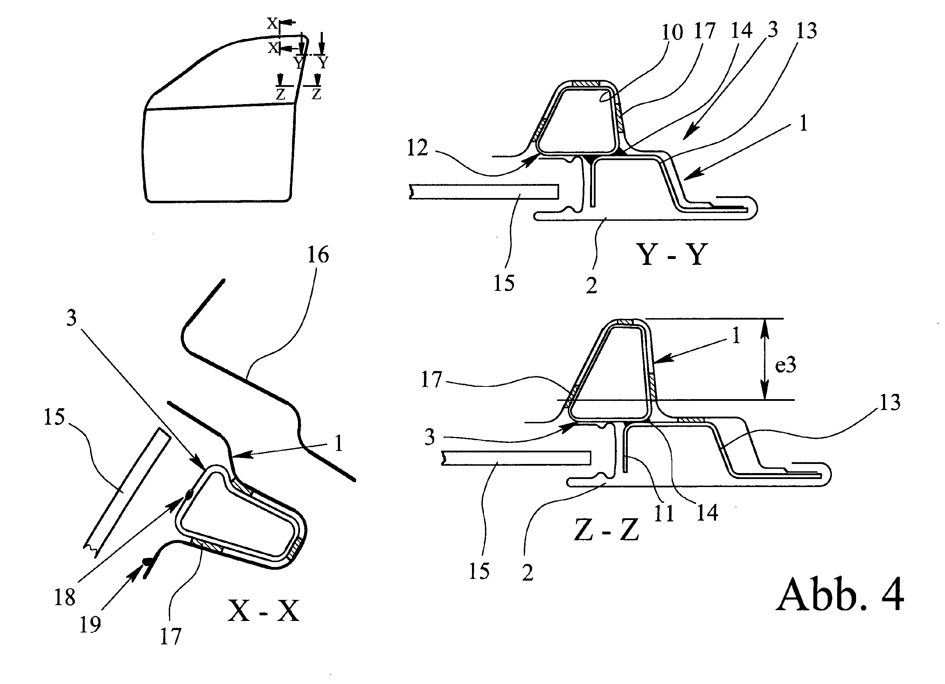

Erfindungsgemäß wird nun ein ganz anderer Lösungsweg eingeschlagen, der den Einsatz anderer Fügetechniken, insbesondere ein Verkleben der Bauteile des Türrohbaus erlaubt. Der Lehre liegt die grundlegende Idee zugrunde, im Bereich des nicht konstant verlaufenden Bereiches des Türinnenblechs 1, also der sich ändernden Dicke des Türrohbaus, vor allem also im Bereich der B-Säule, der A-Säule oder auch der C-Säule (Abb. 2), den Querschnitt eines Profilrahmens 12 des Rahmenteils 3 über die Länge des Profilrahmens 12 so veränderlich zu gestalten, daß der Gesamtquerschnitt des Profilrahmens 12 dem Querschnitt des Türinnenblechs 1 folgt bzw. zumindest in der Dicke der Dicke des Türrohbaus abschnittsweise angepaßt ist (Abb. 4).

Erfindungsgemäß wird also der Profilrahmen 12 des Türrohbaus zunächst zu seiner äußeren Kontur gebogen und in einem anschließenden Arbeitsgang vorzugsweise durch ein hydraulisches Innenhochdruck-Umformverfahren nach den Vorgaben der gewünschten endgültigen Außenform aufgeweitet. Wesentlich ist, daß die geschlossene Hohlkammer 10 im Profilrahmen 12 nach dem Herstellen und Konturbiegen einem weiteren Arbeitsgang unterworfen wird, der die Außenkontur verändert. Mit der Maßgabe dieses am Produkt erkennbaren Ergebnisses kann man auch nach mit einem hydraulischen Innenhochdruck-Umformverfahren im Ergebnis vergleichbaren Verfahren Umschau halten. Eine Alternative besteht beispielsweise darin, den Profilrahmen 12 aus zwei zueinander komplementären Halbschalen zu fertigen, diese Halbschalen als Blech-Preßteile herzustellen, die bereits die endgültige Außenform aufweisen, und danach die beiden Halbschalen miteinander zu verbinden, insbesondere zu verschweißen.

Konstruktiv wird erfindungsgemäß bewirkt, daß der Profilrahmen 12 eine zur Innenfläche des Türinnenblechs 1 über einen Abstand x (Abb. 4, alle drei Schnitte) nahezu flächenparallele Kontur aufweist. Der vorhandene Bauraum bezüglich des Randfaserabstandsmaßes wird optimal ausgenutzt (e3 in Z-Z von Abb. 4). Der Türrohbau wird mittels des Profilrahmens 12 zumindest im Bereich der Fensterfläche auf das optimale Maß versteift unter vollständiger Ausnutzung der an der jeweiligen Stelle zur Verfügung stehenden Dicke des Türrohbaus, die über die Höhe beispielsweise der B-Säule variiert.

Der Querschnitt des Profilrahmens 12 ist im dargestellten Ausführungsbeispiel geschlossen unter Ausbildung der dargestellten Hohlkammer 10. Diese geschlossene Grundform kann dann rund, oval, abgerundet-eckig etc. modifiziert sein. Die Hohlkammer 10 ist im dargestellten Ausführungsbeispiel geschlossen, weil nur eine geschlossene Hohlkammer 10 die Anwendung des Innenhochdruck-Umformverfahrens ermöglicht. Im dargestellten Ausführungsbeispiel ist weiter am Profilrahmen 12 ein offenes, streckgebogenes Strangpreßprofil 13 angebracht, das Anbringungsmöglichkeiten für andere Elemente schafft, beispielsweise mittels der Flansche 11. Dieses weitere Strangpreßprofil 13 ist mit dem Profilrahmen 12 an den angedeuteten Schweißnähten 14 verschweißt. Als Alternative kann auch ein Preßteil als Zusatzprofil verwendet werden.

Die Schnitte in Abb. 4 lassen im übrigen die Fensterscheibe 15 angedeutet erkennen sowie einen Dachrand 16 (Schnitt X-X).

Im dargestellten Ausführungsbeispiel gibt es für einen Aluminium-Profilrahmen 12 vorschlagsgemäß Wandstärken zwischen 1,5 und 3,5 mm. Der durch das Maß x in Abb. 4 definierte Spalt zwischen der Innenfläche des Türinnenblechs 1 und der Außenfläche des Profilrahmens 12 sollte sich zwischen 0,2 und 2,0 mm, vorzugsweise unter 1,0 mm bewegen.

Erfindungsgemäß ist von besonderer Bedeutung, daß die Konstruktion des Profilrahmens 12 im Türrohbau es ermöglicht, die vorgesehenen Spaltbreiten recht genau einzuhalten. Dadurch kann man hier durchgehend mit einer Klebetechnik als Verbindungstechnik arbeiten. Die entsprechenden Strukturkleber-Raupen 17 sind in Abb. 4 eingezeichnet. An vielen Stellen kann man also für den Zusammenbau des Türrohbaus auf Wärme erfordernde Verbindungstechniken wie Schweißen verzichten, so daß sich auch Bauteilverzug und Bauteiltoleranzen in Grenzen halten lassen.

Fügetoleranzen können weiter dadurch minimiert werden, daß man den Klebespalt gleichsam als variablen Puffer versteht, der auftretende Fügetoleranzen anteilig zu kompensieren vermag. Beim Fügen der Baugruppe Rahmenteil 3 mit dem Profilrahmen 12 mit dem Türinnenblech 1 ist zu berücksichtigen, daß der Auflagereferenzpunkt 18 des Rahmenteils 3, hier am Profilrahmen 12, sich auf der Bauteilaußenseite befindet (Schnitt X-X in Abb. 4). Der entsprechende Auflagereferenzpunkt 19 des Türinnenblechs 1 befindet sich ebenfalls auf dieser Seite. Dadurch treten die Zusammenbautoleranzen im Bereich des Klebespalts mit dem Strukturkleber 17 auf.

Der Profilrahmen 12 zur Verstärkung des Türinnenblechs 1 weist eine Hohlkammer 10 auf, die in einem Strangpreßprofil (Aluminium oder andere Leichtmetalle und Leichtmetall-Verbindungen) oder einem an einer Längsnaht geschweißten Rohr (Aluminium oder Stahl) ausgeformt ist. Wesentlich für die Lehre ist, daß der Querschnitt des Profilrahmens 12 sich über die Länge des Profilrahmens 12 abschnittsweise ändert, so daß bislang im Türinnenblech 1 übrigbleibende, ungenutzte Hohlräume nunmehr für die bessere Versteifung des Türrohbaus genutzt werden können. Gleichzeitig wird es möglich gemacht, aufgrund der geringen Spaltweiten, die über die gesamte Länge des Profilrahmens 12 zwischen dem Profilrahmen 12 und dem Türinnenblech 1 realisiert werden können, das Türinnenblech 1 überall mit dem Profilrahmen 12 zu verkleben. Eine Vorfixierung der zu verklebenden Teile durch mechanische Verbindungstechniken, z. B. durch Nieten, ist dadurch natürlich nicht ausgeschlossen.

Im dargestellten Ausführungsbeispiel gibt es im übrigen nach wie vor auch noch Bördel-Verbindungen, beispielsweise für die Anbringung des Türaußenblechs, sowie Schweißnähte, beispielsweise an den bereits genannten Stellen, aber auch an anderen Stellen im Innenbereich des Türrohbaus.

Neben die besonders verbreiteten Metalle Aluminium und Stahl können im Rahmen der Erfindung auch andere Leichtmetall-Verbindungen, beispielsweise unter Einschluß von Magnesium treten.

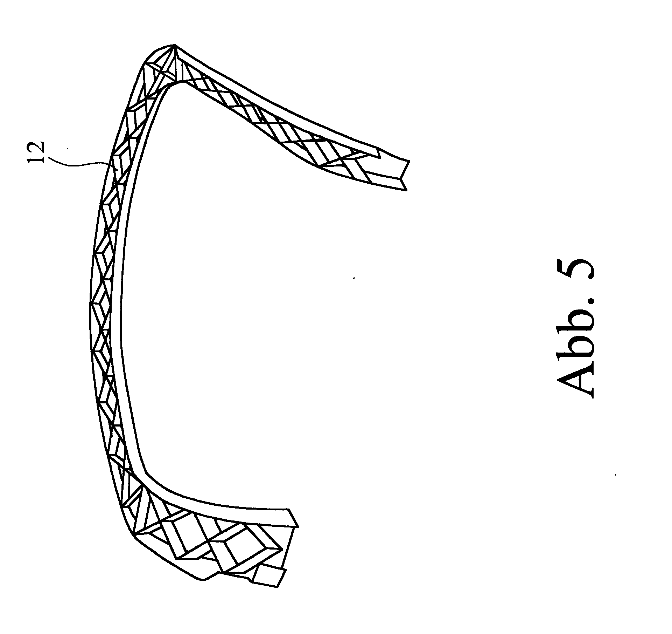

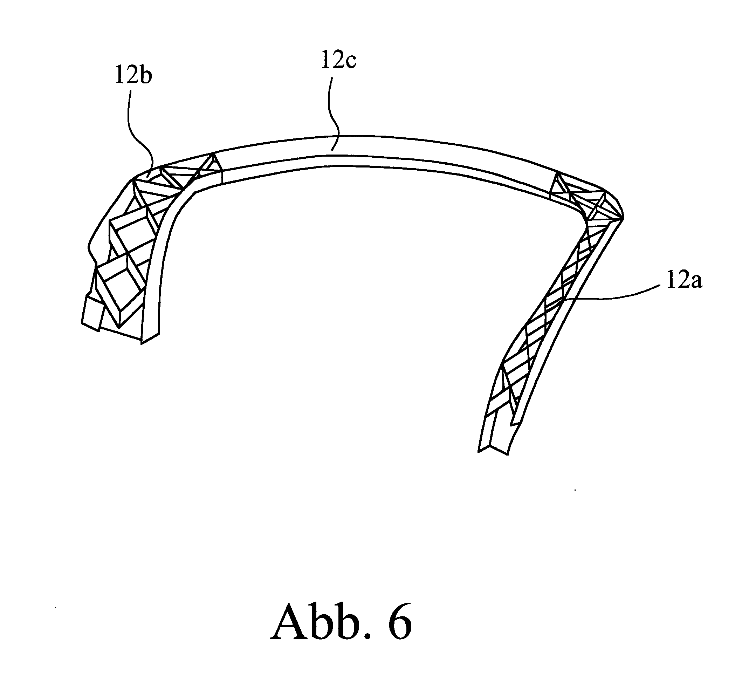

Die Abb. 5 und 6 zeigen zwei weitere Varianten für den Profilrahmen 12. Abb. 5 zeigt einen Profilrahmen 12, der zumindest im Bereich der Fensterfläche umlaufend ausgeführt ist und hier als durchgehendes Leichtmetall-Gußteil, insbesondere Aluminium-Druckgußteil, ausgeführt ist. Erfindungsgemäß ist erkannt worden, daß auch ein Gußteil die Grundbedingung der Lehre erfüllt, zumindest abschnittsweise, insbesondere im Bereich eines im wesentlichen senkrecht verlaufenden Randes des Türrohbaus, einen sich über die Länge des Profilrahmens 12 ändernden Profilquerschnitt zu erlauben. Das in Abb. 5 gezeigte Druckgußteil ist schematisch dargestellt, der Profilrahmen 12 hat hier die im Druckgußverfahren häufig verwendeten inneren Versteifungsstege. Die Oberfläche der Stege bildet insgesamt eine umhüllende Fläche, die für die angestrebte Verbindungstechnik insbesondere des Klebens zur Verfügung steht. Ein solcher Profilrahmen 12 als Gußteil, insbesondere Druckgußteil, kann auch beidseits oder mehrseitig diese Versteifungsstege aufweisen.

Abb. 6 zeigt eine Variante, bei der die hochbelasteten und einen unterschiedlichen Profilquerschnitt aufweisenden Abschnitte zur A-Säule einerseits und zur B-Säule andererseits hin als Gußteile ausgeführt sind, Abschnitte 12a, 12b, wohingegen der Mittelabschnitt ohne Veränderung des Profilquerschnitts, Abschnitt 12c, als herkömmlicher Profilrahmen - Aluminium-Strangpreßprofil - ausgeführt ist. Die zuvor erläuterten Alternativen hinsichtlich der Wahl der Werkstoffe gelten natürlich auch hier.

## Patentansprüche

1. Türrohbau für eine Kraftfahrzeugtür
mit einem einteiligen oder mehrteiligen Profilrahmen (12) aus Metall,
**dadurch gekennzeichnet,**
**daß** der Profilrahmen (12) zumindest abschnittsweise, insbesondere im Bereich eines im wesentlichen senkrecht verlaufenden Randes des Türrohbaus, einen sich über die Länge des Profilrahmens (12) ändernden Profilquerschnitt aufweist.

2. Türrohbau nach Anspruch 1, **dadurch gekennzeichnet, daß** der Profilrahmen (12) eine Hohlkammer (10) aufweist und insbesondere die Hohlkammer (10) einen sich über die Länge des Profilrahmens (12) ändernden Profilquerschnitt aufweist.

3. Türrohbau nach Anspruch 1 oder 2, **dadurch gekennzeichnet, daß** der Profilrahmen (12) zumindest im Bereich der Fensterfläche umlaufend ausgeführt ist.

4. Türrohbau nach Anspruch 2 und ggf. 3, **dadurch gekennzeichnet, daß** der Profilrahmen (12) als geschlossenes Strangpreßprofil aus Aluminium oder einem anderen Leichtmetall oder einer Leichtmetallverbindung, als an einer Längsnaht geschweißtes Rohr aus Aluminium oder einem anderen Leichtmetall oder einer Leichmetallverbindung, als an einer Längsnaht geschweißtes Rohr aus Stahl oder als nahtlos hergestelltes Rohr aus Stahl ausgeführt ist.

5. Türrohbau nach einem der Ansprüche 1 bis 4, wobei der Türrohbau ein vorzugsweise durchgehendes Türinnenblech (1) aufweist, dessen Verlauf insbesondere im Bereich eines im wesentlichen senkrecht verlaufenden Randes des Türrohbaus ein sich änderndes Randfaserabstandsmaß aufweist,
**dadurch gekennzeichnet,**
**daß** der Profilquerschnitt des Profilrahmens (12) dem Verlauf des Türinnenblechs (1) angepaßt ist bzw. folgt.

6. Türrohbau nach Anspruch 5, **dadurch gekennzeichnet, daß** zwischen der Innenfläche des Türinnenblechs (1) und der Außenfläche des Profilrahmens (12) ein durchgehend schmaler Spalt (x) vorliegt.

7. Türrohbau nach Anspruch 6, **dadurch gekennzeichnet, daß** die Breite des Spaltes (x) zwischen 0,2 mm und 2,0 mm, vorzugsweise unter 1,0 mm, liegt.

8. Türrohbau nach einem der Ansprüche 5 bis 7, **dadurch gekennzeichnet, daß** das Türinnenblech (1) mit dem Profilrahmen (12) jedenfalls bereichsweise durch Klebung verbunden ist.

9. Türrohbau nach Anspruch 8, **dadurch gekennzeichnet, daß** die durch Klebung verbundenen Bereiche des Türinnenblechs (1) und des Profilrahmens (12) mittels einer mechanischen Verbindungstechnik, insbesondere mittels Nietverbindungen, zusätzlich fixiert bzw. vorfixiert sind.

10. Türrohbau nach einem der Ansprüche 1 bis 9, daß die Wandstärke des aus Aluminium oder einem anderen Leichtmetall oder einer Leichtmetallverbindung bestehenden Profilrahmens (12) zwischen 1,5 mm und 3,5 mm beträgt.

11. Türrohbau nach Anspruch 2 und ggf. einem der Ansprüche 3 bis 10, **dadurch gekennzeichnet, daß** der die Hohlkammer (10) bildende Profilrahmen (12) mit einem offenen Profil (13), insbesondere ausgeführt als Strangpreßprofil, verbunden, insbesondere verschweißt ist, an dem Flansche (11) o. dgl. ausgebildet sind.

12. Türrohbau nach Anspruch 1 und ggf. einem der Ansprüche 3 und 5 bis 9,
**dadurch gekennzeichnet, daß** der Profilrahmen (12) als durchgehendes Leichtmetall-Gußteil, insbesondere Aluminium-Druckgußteil, ausgeführt ist.

13. Türrohbau nach Anspruch 1 ggf. einem der Ansprüche 3 und 5 bis 9,
**dadurch gekennzeichnet, daß** der Profilrahmen (12) mehrteilig ausgeführt ist und dort, wo er einen sich über die Länge der Profilkammer (12) ändernden Profilquerschnitt aufweist, als Leichtmetall-Gußteil, insbesondere als Aluminium-Druckgußteil, ausgeführt ist, im übrigen jedoch andersartig, insbesondere als Strangpreßprofil, ausgeführt ist.

14. Profilrahmen aus Metall für einen Türrohbau einer Kraftfahrzeugtür mit einer über die Länge verlaufenden Hohlkammer (10),
**gekennzeichnet durch**
die Merkmale des kennzeichnenden Teils eines oder mehrerer der Ansprüche 1 bis 3 und 10 bis 13.

15. Verfahren zur Herstellung eines Türrohbaus für eine Kraftfahrzeugtür,
bei dem zunächst ein Türinnenblech in passender Weise hergestellt, insbesondere in seine endgültige Form gepreßt wird,
**dadurch gekennzeichnet,**
**daß** ein Profilrahmen aus Metall einteilig oder mehrteilig hergestellt wird,
**daß** der Profilrahmen, zumindest abschnittsweise, insbesondere im Bereich eines im wesentlichen senkrecht verlaufenden Randes des Türrohbaus, mit einem sich über die Länge des Profilrahmens ändernden Profilquerschnitt ausgebildet wird, der an den Verlauf des Türinnenblechs im entsprechenden Bereich weitgehend angepaßt ist, und
**daß** der Profilrahmen schließlich mit dem Türinnenblech zusammengesetzt und verbunden wird.

16. Verfahren nach Anspruch 15, **dadurch gekennzeichnet, daß** der Profilrahmen unter Ausbildung einer Hohlkammer hergestellt und in eine dem Rand des Türinnenblechs entsprechend folgende Kontur gebogen wird.

17. Verfahren nach Anspruch 15, **dadurch gekennzeichnet, daß** der Profilrahmen insgesamt als durchgehendes Leichtmetall-Druckgußteil, insbesondere als Aluminium-Druckgußteil, hergestellt wird.

18. Verfahren nach Anspruch 15, **dadurch gekennzeichnet, daß** der Profilrahmen mehrteilig ausgeführt wird und in den Abschnitten, in denen er einen sich über die Länge ändernden Profilquerschnitt aufweist, als Leichtmetall-Gußteil, insbesondere als Aluminium-Druckgußteil, hergestellt wird.

19. Verfahren nach einem der Ansprüche 15 bis 18, **dadurch gekennzeichnet, daß** der Profilrahmen mit dem Türinnenblech jedenfalls in den unmittelbar aneinander anliegenden Bereichen durch Verkleben verbunden wird.

20. Verfahren zur Herstellung eines Profilrahmens für einen Türrohbau einer Kraftfahrzeugtür, wobei der Profilrahmen unter Ausbildung einer Hohlkammer zunächst aus Metall insgesamt hergestellt und in seine Kontur gebogen wird, insbesondere zum Einsatz bei einem Verfahren nach Anspruch 16 und ggf. 19,
**dadurch gekennzeichnet,**
**daß** der endgültige Profilquerschnitt des Profilrahmens, vorzugsweise nach dem Biegen des Profilrahmens in seine allgemeine Kontur, mit einem hydraulischen Innenhochdruck-Umformverfahren hergestellt wird.

21. Verfahren nach Anspruch 20, **dadurch gekennzeichnet daß** der Profilrahmen als geschlossenes Strangpreßprofil aus Aluminium oder einem anderen Leichtmetall oder einer Leichtmetallverbindung, als an einer Längsnaht geschweißtes Rohr aus Aluminium oder einem anderen Leichtmetall oder einer Leichmetallverbindung, als an einer Längsnaht geschweißtes Rohr aus Stahl oder als nahtlos hergestelltes Rohr aus Stahl hergestellt wird.

22. Verfahren nach Anspruch 20 oder 21, **dadurch gekennzeichnet, daß** der die Hohlkammer bildende Profilrahmen mit einem offenen Profil, insbesondere einem Strangpreßprofil, verbunden, insbesondere verschweißt wird, an dem Flansche o. dgl. angeordnet sind, und daß erst danach die Verbindung des Profilrahmens mit dem Türinnenblech erfolgt.
